# EUROPÄISCHE PATENTSCHRIFT

(11) **EP 1 895 223 B1**
(45) Veröffentlichungstag und Bekanntmachung des Hinweises auf die Patenterteilung: **20.04.2011**
(21) Anmeldenummer: 07111763.4
(22) Anmeldetag: 04.07.2007
(51) Int. Cl.: F16L 45/00, E03F 3/04

(54) **Rohrelement für Abwasser- und Entwässerungsleitungen mit einer Revisionsöffnung**
Pipe element for wastewater and drainage pipes with an inspection aperture
Elément de tuyau pour conduites d'eaux usées et de drainage doté d'une ouverture de contrôle

(30) Priorität: 19.08.2006 DE 202006012819 U
(43) Veröffentlichungstag der Anmeldung: 05.03.2008
(73) Patentinhaber: Funke Kunststoffe GmbH, 59071 Hamm-Uentrop (DE)
(72) Erfinder: Funke, Norbert, 48324 Sendenhorst (DE); Funke, Hans Günter, 48324 Sendenhorst (DE)
(74) Vertreter: Tarvenkorn, Oliver

(56) Entgegenhaltungen:
- AT-B- 379 445
- DE-U1- 29 809 873
- GB-A- 1 109 915
- GB-A- 1 257 305

## Beschreibung

Die Erfindung betrifft ein Rohrelement für Abwasser- und Entwässerungsleitungen mit einer Revisionsöffnung mit einer Revisionsöffnung, welche von einer Revisionsschachtwand umgeben ist, welcher mit einem Deckelelement verschließbar ist, wobei das Deckelelement und die Revisionsschachtwand unrund sind.

Solche Rohrelemente sind bekannt wie zum Beispiel in AT 379 445-A offenbart. Sie werden dort in eine Abwasserleitung eingesetzt, wo diese ein Gebäude oder Grundstück verlässt und in die öffentliche Kanalisation übergeht. Sie können auch benutzt werden, um während des Baus der Rohrleitung an Knickpunkten im Leitungsverlauf Vermessungsgeräte in der Leitung positionieren und entnehmen zu können. Rohrelemente der eingangs genannten Art sind insbesondere zu einer annähernd horizontalen Montage bestimmt. Darüber hinaus werden Sie z. T. auch im unteren Bereich eines senkrechten Fallrohrs eingesetzt, um eine Zugangsmöglichkeit für eine Kanalrohrreinigung zu geben.

Um Reinigungsvorrichtungen wie Rohrspiralen oder Kameravorrichtungen aber auch Vermessungsgeräte wie Laser und Zielplatten einsetzen zu können, ist die Revisionsöffnung annähernd rechteckig ausgebildet, erstreckt sich also über einen Teil der Länge des Rohrelements und nimmt insbesondere nahezu dessen vollständige Breite ein. Wegen der unrunden Ausbildung ist das Aufsetzen von Schraubdeckeln dabei nicht möglich. Vorgesehen sind allgemein vielmehr eckseitige Befestigungen über Bajonettverschlüsse, Schrauben oder dergleichen. Für die Befestigungselemente sind am eigentlichen Rohrelement wie auch am Deckelelement Aufnahmen auszubilden. Erfolgt die Befestigung beispielsweise über Gewindeschrauben, so muss eine Gewindemutter in das meist aus einem Kunststoff hergestellte Rohrelement eingesetzt und dort umspritzt werden, sodass die Befestigungen an dem bekannten Rohrelement nur mit relativ hohen Kosten herzustellen sind.

Darüber hinaus erfolgt nur eine punktuelle Anpressung des Deckels an die Oberkante der Revisionsschachtwand nah an den Befestigungspunkten. Kommt es zu einem Druckanstieg im Abwasserrohrsystem, beispielsweise in Folge eines Rückstaus, kann die Verbindung des Rohrelements mit dem Deckel undicht werden. Angesichts der relativ großen Fläche, auf die ein im Abwassersystem aufgebauter Druck wirken kann, und der daraus resultierenden hohen Kräfte kann es auch zu einem Absprengen der Befestigungselemente kommen.

Aufgabe der Erfindung ist es somit, bei einem Rohrelement mit einer Revisionsöffnung die Dichtungswirkung zu verbessern und dabei auch eine kostengünstige Herstellung zu ermöglichen.

Gelöst wird diese Aufgabe durch ein Rohrelement mit den Merkmalen des Anspruchs 1.

Durch die stopfenartige Ausbildung des Deckelelements erfolgt eine Verpressung zwischen Deckel und Revisionsschachtwand über den gesamten Umfang, was zu hohen Klemmkräften führt, welche ausreichend sind, um eine sehr gute Dichtwirkung zu garantieren. Der stopfenartige Deckel kann sehr einfach hergestellt werden, wobei eine umlaufende Nut ausreicht, um eine Ringdichtung einzuziehen und in Einschubrichtung des Deckels festzulegen.

Eine rechteckige Konfiguration von Revisionsschachtwand und Deckelelement ist vorteilhaft, da hiermit die durch den Rohrdurchmesser vorgegebene Breite der Revisionsöffnung über deren gesamte Länge ausgenutzt werden kann.

Andere Konfigurationen sind jedoch ebenso denkbar, beispielsweise eine gestreckte sechseckige Konfigurationen mit einer Langseite, bei der zwei Wandabschnitte einen stumpfen Winkel einschließen.

Der stopfenartige Deckel muss erfindungsgemäß lediglich davor gesichert werden, mit seiner Ringdichtung aus der Revisionsschachtwand herausgedrückt zu werden, wozu bereits Spannbänder, Rohrschellen oder dgl. ausreichend sein können.

Um die Verriegelung zu erleichtern und auch gegenüber ungewöhnlich hohen Drücken im eigentlich drucklosen Abwasserrohrsystem die Dichtigkeit an der Revisionsöffnung sicher zu stellen, sieht eine bevorzugte Ausführungsform der Erfindung vor, dass das in die Revisionsschachtwand eingesetzte Deckelelement über deckungsgleiche Riegelaufnahmeausnehmungen im Stopfenkörper und in der Revisionsschachtwand arretierbar ist, wozu ein Bolzenelement eingesetzt wird, insbesondere ein Riegelstabelement.

Kommt es nun zu einem Druckanstieg im Inneren des Rohrelementes, wirkt dieser Druck auf die gesamte Fläche des Stopfenkörpers am Deckelelement und verschiebt dieses in der Revisionsschachtwand. Durch die gemäß der bevorzugten Ausführungsform vorgesehenen Riegelstabelemente ist der vertikale Verschiebeweg des Stopfenkörpers innerhalb der Revisionsschachtwand dabei begrenzt.

Die formschlüssige Verbindung der Riegelstabelemente in den Riegelaufnahmeausnehmungen kann auch mit reichlich Spiel ausgebildet sein, um ein leichtes Einsetzen der Riegelstabelemente zu ermöglichen. Da nämlich erfindungsgemäß ein Stopfenkörper eingesetzt ist, der wie ein Kolben im Zylinder gelagert ist, kann bei einem Druckanstieg der Stopfenkörper bedenkenlos etwas axial verschoben werden, bevor die formschlüssige Verriegelung greift. Die Dichtwirkung bleibt erfindungsgemäß auch bei einer leichten axialen Verschiebung des Stopfenkörpers bestehen, solange die Ringdichtung innerhalb des Revisionsschachts liegt.

Eine besonders einfache Montage wird dadurch ermöglicht, dass je zwei Riegelaufnahmeausnehmungen fluchtend an gegenüberliegenden Wandabschnitten angeordnet sind und dann ein gemeinsames Riegelstabelement, das sich quer oder längs über den gesamten Revisionsschacht samt Deckel erstreckt, eingeschoben wird.

Je nach Länge oder Breite der Revisionsöffnung reichen zwei bis drei Riegelstabelemente, um den Deckel formschlüssig in der Revisionsschachtwand zu halten und eine ausreichende Abstützung des Deckels gegenüber den Druckkräften zu geben.

Um die Durchbiegung des Deckelements weiter zu reduzieren, ist es vorteilhaft, wenn der Stopfenkörper als ein nach oben offener Hohlkörper ausgebildet ist, welcher mit senkrecht zu einer Bodenfläche angeordneten Quer- und/oder Längsrippen ausgesteift ist. Eine solche wabenförmige Struktur ist beispielsweise im Spritzgießverfahren einfach herstellbar. Ein weiterer Vorteil ergibt sich dadurch, dass sich die Quer- und/oder Längsrippen bis an die Riegelstabelemente erstrecken, das heißt, die Riegelstabelemente liegen zunächst lose auf den Rippen auf. Bei einem vorstehend geschilderten Druckanstieg erfolgt damit nicht nur eine Abstützung des Deckelelements am äußeren Mantel des Stopfenkörpers, sondern auch an den Kreuzungspunkten mit den unter den Riegelstabelementen liegenden Rippen.

Um die Riegelstabelemente in einem mittleren Bereich der axialen Höhe des Stopfenkörpers anordnen zu können, andererseits aber die mögliche axiale Höhe für die Aussteifungsrippen soweit wie möglich zu nutzen, ist es vorteilhaft, wenn die Rippen an den Kreuzungspunkten mit den Riegelstabelementen an ihrer jeweiligen Oberkante eine muldenförmige Ausnehmung aufweisen, durch die dann die Riegelstabelemente geführt sind.

Während die vorstehend geschilderten Maßnahmen der Verbesserung der axialen Festlegung des Stopfenkörpers dienen, dient eine weitere vorteilhafte Ausführungsform der Aufnahme von radialen Kräften, die auf die innere Mantelfläche der Revisionsschachtwand unterhalb des Deckelelements wirken.

Um eine sich hieraus ergebende Aufweitung der Revisionsschachtwand und damit ein evtl. Abheben von der Ringdichtung am Deckelelement zu verhindern, kann vorgesehen sein, Zapfen an der Revisionsschachtwand auszubilden, welche über deren Oberkante vorstehen und in kompatible Zapfenaufnahmeausnehmungen im Flansch des Deckelelementes eingreifen können. Hierdurch wird die Revisionsschachtwand, insbesondere an deren zur Rohrachse paralleler Langseite, formschlüssig am Flansch des Deckelelements festgelegt.

Weitet sich die Revisionsschachtwand während des Eindrückens des mit einer Dichtung versehenen Deckelelements seitlich auf, so ist eine keilförmige und etwas verlängerte Ausbildung der Zapfen günstig, die dann beim Eintauchen in die Zapfenaufnahmeausnehmungen ein weiteres Aufweiten verhindern bzw. die Revisionsschachtwand wieder in die ursprüngliche Form zurückzwingen.

Verstärkungslaschen, also Wandbereiche erhöhter Wanddicke in der Revisionsschachtwand, dienen der Erhöhung der Ausreißfestigkeit im Bereich der Riegelaufnahmeausnehmungen. Außerdem können diese Bereiche mit erhöhter Wanddicke dazu genutzt werden, die zuvor beschriebenen Zapfen zur radialen Festlegung in einfacher Weise als Überstand auszubilden.

Um auch bei beengten Platzverhältnissen eine Verriegelung über Riegelstabelemente zu ermöglichen, die sich über die gesamte Breite bzw. Länge der Revisionsöffnung erstrecken, ist eine Konfiguration vorteilhaft, bei der an wenigstens einer Seite soviel Spiel der Riegelaufnahmeausnehmungen gegenüber dem Riegelstab gegeben ist, dass der Riegelstab im Bereich der Deckelfläche schräg eingesetzt und zunächst an einer Seite eingeschoben werden kann. Wenn das Ende des Riegelstabs die Kante des Flansches passiert hat, wird der Riegelstab in die horizontale Verriegelungsstellung hinuntergedrückt und in entgegen gesetzte Richtung zurückgezogen, bis er auch dort in die Riegelaufnahmeausnehmungen eingreift.

Die Erfindung wird mit weiteren vorteilhaften Ausgestaltungen mit Bezug auf die Zeichnungen näher erläutert. Die Figuren zeigen:
- Fig. 1: ein Rohrelement mit abgenommenem Deckelelement in perspektivischer Explosionsdarstellung;
- Fig. 2: das Rohrelement mit geschlossener Revisionsöffnung in perspektivischer Darstellung;
- Fig. 3a: das Deckelelement in seitlicher Ansicht;
- Fig. 3b: das Deckelelement im Längsschnitt;
- Fig. 4: das Rohrelement wie in Fig. 2, jedoch mit geänderten Riegelstabelementen;
- Fig. 5a: ein Rohrelement mit einer zweiten Ausführungsform eines Deckelelements in Ansicht von oben auf den Deckel und
- Fig. 5b: das Rohrelement aus Fig. 5a im Schnitt.

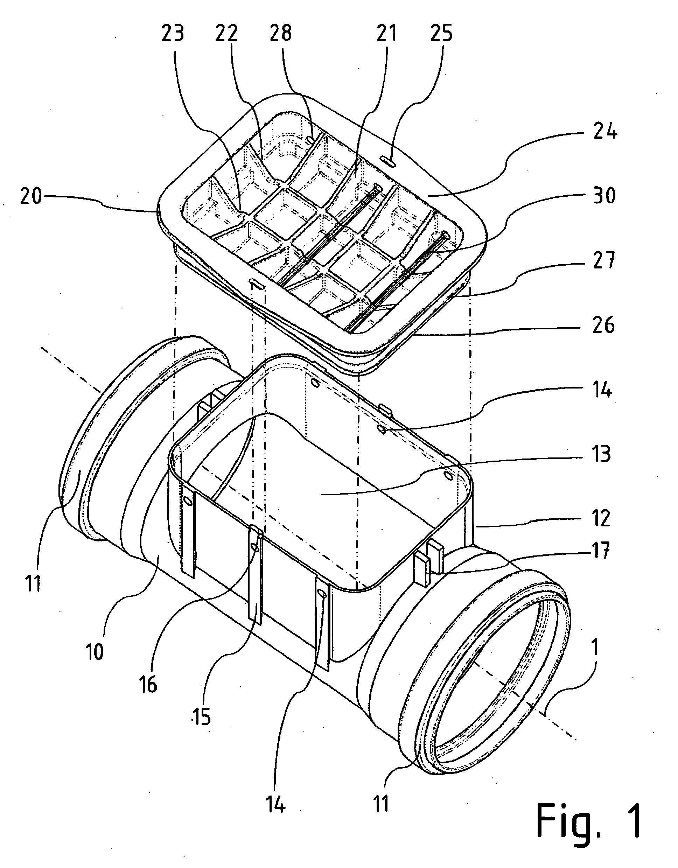

Fig. 1 zeigt ein Rohrelement 10, bei dem der eigentliche Rohrkörper beidseits jeweils in einer Muffe 11 endet. Andere Ausbildungen der Rohrenden sind in an sich bekannter Weise möglich.

Die obere Hälfte des Rohrkörpers ist in einem zentralen Längenbereich aufgetrennt. Dabei ist im dargestellten Ausführungsbeispiel die Länge der Öffnung größer als deren Breite, sodass sich eine in Draufsicht im Wesentlichen rechteckige Revisionsöffnung 13 ergibt, welche eckseitig gerundet ist.

An die Revisionsöffnung 13 im Rohrkörper schließt sich eine Revisionsschachtwand 12 an, die sich senkrecht zu einer Rohrmittelachse 1 erstreckt. Die Wandhöhe der Revisionsschachtwand 12 ist, in Anpassung an die zylindrische Gestalt des Rohrelements 10, unterschiedlich hoch, damit sich eine ebene Oberkante ergibt. Die Revisionsschachtwand 12 besitzt als zur Anpassung an die Mantelform des Rohrkörpers nach unten eine Sattelform und schließt oben vorzugsweise mit einer Kante ab, die in einer Ebene liegt.

Verstärkungsrippen 17 dienen der Aussteifung des Wandabschnitts und dessen Abstützung an der zylindrischen Rohrmuffe.

Die Revisionsschachtwand 12 ist an mehreren Stellen über verstärkungslaschen 15, die sich vom Rohrmantel bis zur Oberkante der Schachtwand 12 erstrecken, verstärkt. In die Verstärkungslaschen sind jeweils Riegelaufnahmeausnehmungen 14 eingebracht. Die mittlere der in Fig. 1 dargestellten Verstärkungslaschen 15 setzt sich darüber hinaus in einem Zapfen 16 fort, welcher über die Oberkante der Revisionsschachtwand 12 hinaus steht.

Ein Deckelelement 20 ist im Wesentlichen als ein Stopfenkörper 26 ausgebildet, der in die Revisionsschachtwand 12 einsetzbar ist, wie durch die strichpunktierten senkrechten Linien angedeutet ist. Am Umfang des Stopfenkörpers ist eine Ringdichtung 27 aufgezogen, die in geeigneter Weise profiliert ist, beispielsweise als Ringlippendichtung.

Nach oben hin ist der Stopfenkörper 26 durch einen Flansch 24 abgeschlossen, welcher seitlich überragt und damit auch mindestens bis auf die Oberkante der Revisionsschachtwand 12 reicht.

Im dargestellten Ausführungsbeispiel ist das Deckelelement 20 schüsselförmig als nach oben offener Hohlkörper ausgebildet. Der Innenraum des Stopfenkörpers 26 ist dabei durch mehrere sich kreuzende Quer- und Längsrippen 21, 22 ausgesteift. Ausnehmungen 25 im Flansch 24 ermöglichen die Aufnahme der Zapfen 16 an der Revisionsschachtwand 12.

Weiterhin dargestellt sind zwei Riegelstäbe 30, die durch Mulden 23 in den Längsrippen 22 und durch Riegelaufnahmeausnehmungen 28 im Stopfenkörper 26 geführt sind.

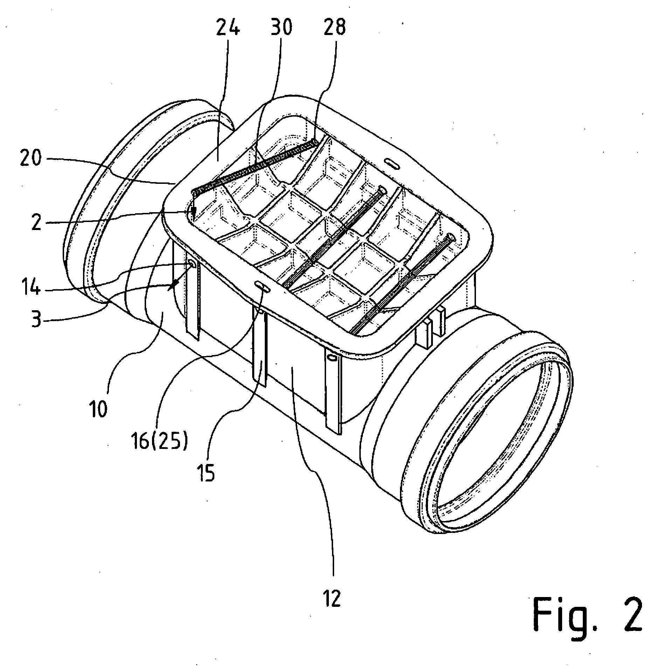

Fig. 2 zeigt das Rohrelement 10 mit montiertem Deckelelement 20. Dabei sind die beiden rechten Riegelstabelemente 30 bereits in die vorgesehenen Riegelaufnahmeausnehmungen 14 eingeschoben, während das in Figur 2 links oben dargestellte Riegelstabelement 30 zunächst nur einseitig in der Aufnahmeausnehmung 28 eingesetzt ist und in Pfeilrichtung 2 nach unten, auf die Mulde 23 zu, gedrückt wird, bevor dann noch einmal ein Rückzug in die Ausnehmung 14 gemäß der Richtung des Pfeils 3 erfolgt. Damit ist das Deckelelement 20 dann an insgesamt 6 Punkten mit der Revisionsschachtwand 12 formschlüssig gekoppelt.

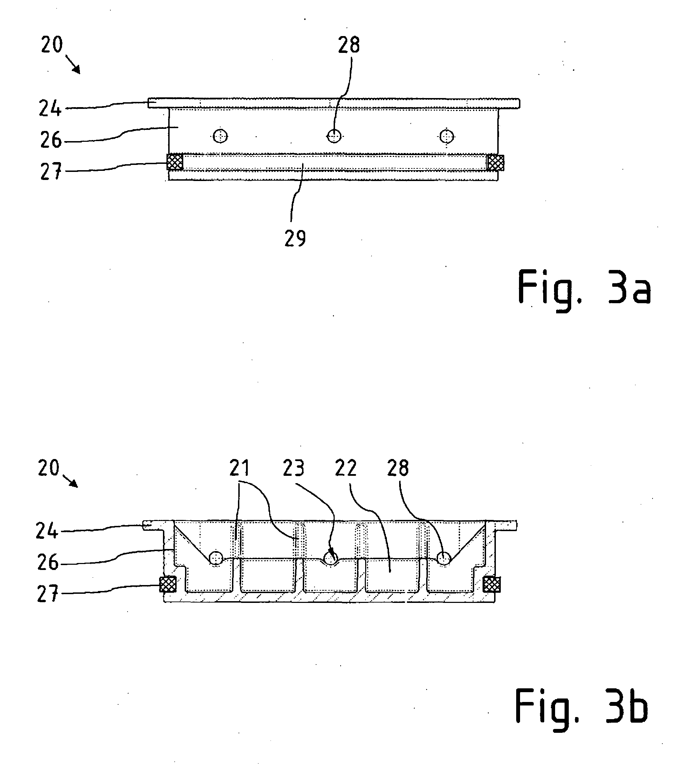

Fig. 3a zeigt das Deckelelement 20 von der Außenseite her. Am Stopfenkörper ist eine Nut 29 eingebracht, in die die Ringdichtung 27 eingezogen ist.

Fig. 3b zeigt in gleicher Blickrichtung wie in Fig. 3a einen Schnitt entlang einer Längsachse, welche parallel zur Rohrmittelachse 1 des Rohrelements 10 und zu einer Längsrippe 22 verläuft. Die Querrippen 21 sind hier angeschnitten. Gut erkennbar sind die Mulden 23 in der Oberkante der Längsrippe 22, die eine tiefere Anordnung der in die Ausnehmungen 28 eingeschobenen Riegelstabelemente 30 erlauben.

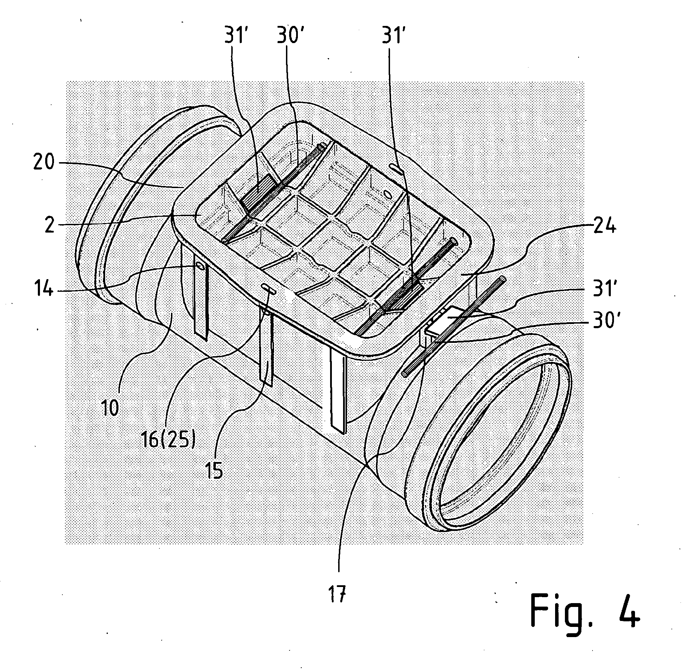

Fig. 4 zeigt das Rohrelement 10 mit montiertem Deckelelement 20 wie in Figur 2 auch. In diesem Fall sind andersartige Riegelstabelemente 30' eingesetzt, die eine seitliche Lasche 31' aufweisen. Wie bei den beiden bereits in das Deckelelement 20 eingesetzten Riegelstabelementen 30' erkennbar, sind Breite und Länge der Laschen 31' auf den Zwischenraum zwischen zwei benachbarten Längsrippen 22 abgestimmt. Wird die Lasche nach unten in den Zwischenraum gekippt bzw. fällt diese aufgrund des Eigengewichts von selbst dort hinein, so ist das Riegelstabelement 30' damit in seiner Längsrichtung formschlüssig festgelegt.

Rechts ist ein drittes Riegelstabelement 30' mit Lasche 31' dargestellt. Die Lasche 31' ist zwischen die Verstärkungsrippen 17 an der Revisionsschachtwand 12 und den Flansch 24 am Stopfenkörper 26 geschoben. Das Riegelstabelement 30' kann somit dazu benutzt werden, ein fest sitzendes Deckelelement 20 abzuhebeln.

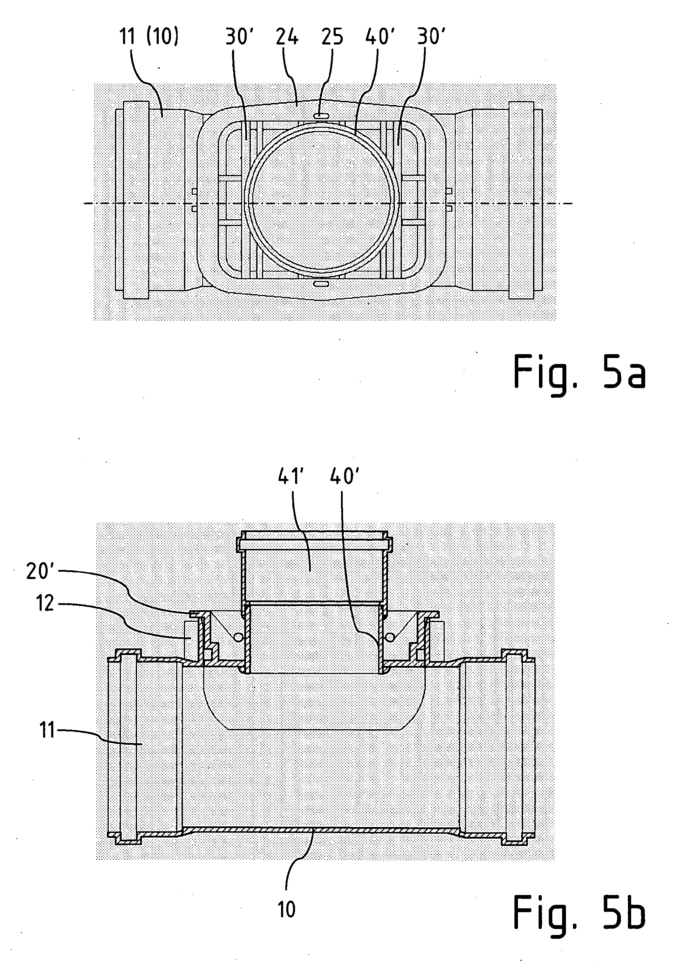

Fig. 5a zeigt ein Deckelelement 20' mit einem integrierten Kontrollschachtstutzen 40' von oben. Beidseits des Kontrollschachtstutzens 40' werden die bereits beschriebenen Verriegelungen über die in die Riegelaufnahmeausnehmungen 28 eingesetzten Riegelstabelemente 30 bzw. 30' hergestellt. Das Deckelelement 20' stimmt hinsichtlich Kontur und Verrippung sowie der Art und Weise der Aufnahme und Verriegelung in der Revisionsschachtwand 12 mit dem zuvor beschriebenen geschlossen Deckelelement 20 überein.

Wie der Schnitt in Fig. 5b zeigt, ist am Kontrollschachtstutzen 40' eine Muffe 41' ausgebildet, die die Kopplung mit weiteren Bauteilen ermöglicht. Insbesondere kann ein bis zur Erdoberfläche reichender Kontrollschacht mit Verschlussdeckel aufgesetzt werden, so dass auch nach Fertigstellung der Straßenbauarbeiten ein Zugang mit fernbedienbaren Geräten zu Reinigungs- und Kontrollzwecken bis in das Rohrelement 10' möglich ist.

## Patentansprüche

1. Rohrelement (10; 10') für Abwasser- und Entwässerungsleitungen, mit einer Revisionsöffnung (13), die von einer Revisionsschachtwand (12) umgeben ist, welche mit einem Deckelelement (20; 20') verschließbar ist, wobei das Deckelelement (20; 20') und die Revisionsschachtwand (12) unrund sind, und das Deckelelement (20; 20') wenigstens aus einem in die Revisionsschachtwand (12) einsetzbaren Stopfenkörper (26) mit wenigstens einer außenumfänglich daran angeordneten Ringdichtung (27) und einem Flansch (24) gebildet ist, welcher an wenigstens einem Teil des Umfangs des Stopfenkörpers (26) seitlich überkragt, **dadurch gekennzeichnet, dass** das Deckelelement (20; 20') über wenigstens ein Riegelstabelement (30; 30') arretierbar ist, das sich quer und/oder längs über das Deckelelement (20; 20') bis in die Revisionsschachtwand (12) erstreckt.

2. Rohrelement (10; 10') nach Anspruch 1, **dadurch gekennzeichnet, dass** das Deckelelement (20; 20') und die Revisionsschachtwand (12) eine rechteckige Konfiguration aufweisen.

3. Rohrelement (10; 10') nach Anspruch 1 oder 2, **dadurch gekennzeichnet, dass** das in die Revisionsschachtwand (12) eingesetzte Deckelelement (20; 20') über deckungsgleiche Riegelaufnahmeausnehmungen (28, 14) im Stopfenkörper (26) und in der Revisionsschachtwand (12) mittels des wenigstens eines Riegelstabelements (30; 30') arretierbar sind.

4. Rohrelement (10; 10') nach Anspruch 3, **dadurch gekennzeichnet, dass** je zwei Riegelaufnahmeausnehmungen (28, 14), in welche ein gemeinsames Riegelstabelement (30; 30') einsetzbar ist, fluchtend an gegenüberliegenden Wandabschnitten der Revisionsschachtwand (12) bzw. des Stopfenkörpers (26) angeordnet sind.

5. Rohrelement (10; 10') nach einem der Ansprüche 1 bis 4, **dadurch gekennzeichnet, dass** der Stopfenkörper (26) als nach oben offener Hohlkörper ausgebildet ist, der mit senkrecht zu einem Boden des Stopfenkörpers (26) angeordneten Quer- und/oder Längsrippen (21, 22) ausgesteift ist.

6. Rohrelement (10; 10') nach Anspruch 5, **dadurch gekennzeichnet, dass** sich die Quer- und/oder Längsrippen (21, 22) bis an das wenigstens eine Riegelstabelement (30; 30') erstrecken.

7. Rohrelement (10; 10') nach Anspruch 6, **dadurch gekennzeichnet, dass** wenigstens eine Quer- und/oder Längsrippe (21, 22) an ihrer Oberkante eine muldenförmige Aussparung zur Durchführung des Riegelstabelements (30; 30') aufweist.

8. Rohrelement (10; 10') nach einem der vorhergehenden Ansprüche, **dadurch gekennzeichnet, dass** die Revisionsschachtwand (12) wenigstens einen über ihre Oberkante vorstehenden Zapfen (16) aufweist und gegenüberliegend im Flansch (24) des Deckelelements (20; 20') eine Zapfenaufnahmeausnehmung (25) eingebracht ist.

9. Rohrelement (10; 10') nach Anspruch 8, **dadurch gekennzeichnet, dass** die Zapfen (16) nach oben keilförmig zulaufen.

10. Rohrelement (10; 10') nach einem der Ansprüche 3 bis 9, **dadurch gekennzeichnet, dass** die Revisionsschachtwand (12) Verstärkungslaschen (15) mit erhöhter Wanddicke aufweist, in welche die Riegelaufnahmeausnehmungen (14) eingebracht sind.

11. Rohrelement (10; 10') nach wenigstens einem der Ansprüche 8 bis 10, **dadurch gekennzeichnet, dass** die Zapfen (16) als Fortsatz der Verstärkungslaschen (15) ausgebildet sind.

12. Rohrelement (10; 10') nach einem der Ansprüche 1 bis 11, **dadurch gekennzeichnet, dass** das Rohrelement mit wenigstens einer Rohrmuffe (11) versehen ist und ein muffenseitiger Wandabschnitt der Revisionsschachtwand (12) über wenigstens einen Verstärkungssteg (17) an der Rohrmuffe (11) abgestützt ist.

13. Rohrelement (10') nach einem der Ansprüche 1 bis 12, **dadurch gekennzeichnet, dass** ein Kontrollschachtstutzen (40') durch das Deckelelement (20') hindurch geführt ist.

14. Rohrelement (10') nach Anspruch 13, **dadurch gekennzeichnet, dass** beidseits des Kontrollschachtstutzen (40') wenigstens je ein Riegelstabelement (30; 30') und Riegelaufnahmeausnehmungen (14, 28) vorgesehen sind.

15. Rohrelement (10; 10') nach einem der Ansprüche 3 bis 14, **dadurch gekennzeichnet, dass** ein Riegelstabelement (30; 30') von einem Bereich des Flansches (24) schräg in die gegenüberliegenden Riegelaufnahmeausnehmungen (28, 14) im Stopfenkörper (26) und in der Revisionsschachtwand (12) einschiebbar ist.

16. Rohrelement (10; 10') nach einem der Ansprüche 5 bis 15, **dadurch gekennzeichnet, dass** das wenigstens eine Riegelstabelement (30') mit einer seitlichen Lasche (31') versehen ist, deren Länge kleiner ist als der Abstand zwischen den Quer- und/oder Längsrippen (21, 22), auf denen das Riegelstabelement (30') aufliegt.

17. Rohrelement (10; 10') nach Anspruch 16, **dadurch gekennzeichnet, dass** der Abstand zwischen einer Oberkante der Verstärkungsstege (17) und der Unterkante des Flansches (24) des Deckels (20) größer ist als die Dicke der Lasche (31') des Riegelstabelements (30').

## Claims

1. A pipe element (10; 10') for waste water and sewage lines, with an inspection opening (13) which is surrounded by an inspection shaft wall (12) which is capable of being closed with a cover element (20; 20'), wherein the cover element (20; 20') and the inspection shaft wall (12) are non-round, and the cover element (20; 20') is formed at least from one plug member (26) capable of being inserted into the inspection shaft wall (12) and with at least one annular seal (27) arranged on the external periphery thereof and a flange (24) which projects laterally beyond at least part of the periphery of the plug member (26), **characterized in that** the cover element (20; 20') is capable of being locked by way of at least one locking bar element (30; 30') which extends transversely and/or longitudinally over the cover element (20; 20') into the inspection shaft wall (12).

2. A pipe element (10; 10') according to claim 1, **characterized in that** the cover element (20; 20') and the inspection shaft wall (12) have a rectangular configuration.

3. A pipe element (10; 10') according to claim 1 or 2, **characterized in that** the cover element (20; 20') inserted into the inspection shaft wall (12) is capable of being locked by means of the at least one locking bar element (30; 30') by way of congruent lock receiving recesses (28, 14) in the plug member (26) and in the inspection shaft wall (12).

4. A pipe element (10; 10') according to claim 3, **characterized in that** two lock receiving recesses (28, 14), into which a common locking bar element (30; 30') is capable of being inserted, are arranged in each case in alignment on opposite wall portions of the inspection shaft wall (12) and the plug member (26) respectively.

5. A pipe element (10; 10') according to any one of claims 1 to 4, **characterized in that** the plug member (26) is designed in the form of a hollow member which is open at the top and which is reinforced with transverse and/or longitudinal ribs (21, 22) arranged at a right angle to a base of the plug member (26).

6. A pipe element (10; 10') according to claim 5, **characterized in that** the transverse and/or longitudinal ribs (21, 22) extend as far as the at least one locking bar element (30; 30').

7. A pipe element (10; 10') according to claim 7, **characterized in that** at least one transverse and/or longitudinal rib (21, 22) has on the upper edge thereof a trough-shaped notch for the passage of the locking bar element (30; 30').

8. A pipe element (10; 10') according to any one of the preceding claims, **characterized in that** the inspection shaft wall (12) has at least one pin (16) projecting beyond the upper edge thereof and a pin-receiving recess (25) is formed opposite in the flange (24) of the cover element (20; 20').

9. A pipe element (10; 10') according to claim 8, **characterized in that** the pins (16) taper towards the top in a wedge-shaped manner.

10. A pipe element (10; 10') according to any one of claims 3 to 9, **characterized in that** the inspection shaft wall (12) has reinforcement fastening plates (15) with an increased wall thickness in which the lock receiving recesses (14) are formed.

11. A pipe element (10; 10') according to any one of claims 8 to 10, **characterized in that** the pins (16) are formed as an extension of the reinforcement plates (15).

12. A pipe element (10; 10') according to any one of claims 1 to 11, **characterized in that** the pipe element is provided with at least one pipe sleeve (11) and a wall portion of the inspection shaft wall (12) towards the sleeve is supported on the pipe sleeve (11) by way of at least one reinforcement web (17).

13. A pipe element (10; 10') according to any one of claims 1 to 12, **characterized in that** a manhole socket (40') extends through the cover element (20').

14. A pipe element (10; 10') according to claim 13, **characterized in that** at least one respective locking bar element (30; 30') and lock receiving recesses (14, 28) are provided on both sides of the manhole socket (40').

15. A pipe element (10; 10') according to any one of claims 3 to 14, **characterized in that** a locking bar element (30; 30') is capable of being inserted from an area of the flange (24) obliquely into the opposite lock receiving recesses (28, 14) in the plug member (26) and in the inspection shaft wall (12).

16. A pipe element (10; 10') according to any one of claims 5 to 15, **characterized in that** the at least one locking bar element (30') is provided with a lateral fastening plate (31'), the length of which is less than the distance between the transverse and/or longitudinal ribs (21, 22) on which the locking bar element (30') rests.

17. A pipe element (10; 10') according to claim 16, **characterized in that** the distance between an upper edge of the reinforcement webs (17) and the lower edge of the flange (24) of the cover (20) is greater than the thickness of the fastening plate (31') of the locking bar element (30').

## Revendications

1. Elément de tuyau (10 ; 10') pour conduites d'eaux usées et de drainage, doté d'une ouverture de visite (13) entourée par une paroi de regard d'égout (12) qui peut être fermée par un élément de couvercle (20 ; 20'), l'élément de couvercle (20 ; 20') et la paroi de regard d'égout (12) étant non-circulaires, et l'élément de couvercle (20 ; 20') étant formé d'au moins un corps de bouchon (26) pouvant être inséré dans la paroi de regard d'égout (12) avec au moins une garniture annulaire disposée dessus sur la périphérie externe et une bride (24) qui déborde latéralement sur au moins une partie de la périphérie du corps de bouchon (26), **caractérisé en ce que** l'élément de couvercle (20 ; 20') peut être bloqué par au moins un élément de barre de verrouillage (30 ; 30') qui s'étend transversalement et/ou longitudinalement sur l'élément de couvercle (20 ; 20') jusque dans la paroi de regard d'égout (12).

2. Elément de tuyau (10 ; 10') selon la revendication 1, **caractérisé en ce que** l'élément de couvercle (20 ; 20') et la paroi de regard d'égout (12) présentent une configuration rectangulaire.

3. Elément de tuyau (10 ; 10') selon la revendication 1 ou 2, **caractérisé en ce que** l'élément de couvercle (20 ; 20') inséré dans la paroi de regard d'égout (12) peut être bloqué par des évidements de logement de verrouillage coïncidents (28, 14) dans le corps de bouchon (26) et dans la paroi de regard d'égout (12) au moyen d'au moins un élément de barre de verrouillage (30; 30').

4. Elément de tuyau (10 ; 10') selon la revendication 3, **caractérisé en ce que** tous les deux évidements de logement de verrouillage (28, 14), dans lesquels peut être inséré un élément de barre de verrouillage (30 ; 30') commun, sont disposés en alignement sur des sections de paroi opposées de la paroi de regard d'égout (12) ou du corps de bouchon (26).

5. Elément de tuyau (10 ; 10') selon l'une quelconque des revendications 1 à 4, **caractérisé en ce que** le corps de bouchon (26) est réalisé comme un corps creux ouvert vers le haut qui est renforcé par des nervures transversales et/ou longitudinales (21, 22) disposées perpendiculairement à un fond du corps de bouchon (26).

6. Elément de tuyau (10 ; 10') selon la revendication 5, **caractérisé en ce que** les nervures transversales et/ou longitudinales (21, 22) s'étendent jusqu'à au moins un élément de barre de verrouillage (30 ; 30').

7. Elément de tuyau (10 ; 10') selon la revendication 6, **caractérisé en ce qu'**au moins une nervure transversale et/ou longitudinale (21, 22) présente, sur son arête supérieure, un évidement en forme d'auge pour le passage de l'élément de barre de verrouillage (30 ; 30').

8. Elément de tuyau (10 ; 10') selon l'une quelconque des revendications précédentes, **caractérisé en ce que** la paroi de regard d'égout (12) présente au moins un tenon (16) dépassant de son arête supérieure (16) et **en ce qu'**un évidement de logement de tenon (25) est réalisé à l'opposé dans la bride (24) de l'élément de couvercle (20 ; 20').

9. Elément de tuyau (10 ; 10') selon la revendication 8, **caractérisé en ce que** les tenons se terminent de manière cunéiforme vers le haut.

10. Elément de tuyau (10 ; 10') selon l'une quelconque des revendications 3 à 9, **caractérisé en ce que** la paroi de regard d'égout (12) présente des languettes de renforcement (15) dotées d'une épaisseur de paroi accrue, dans lesquelles les évidements de logement de verrouillage (14) sont réalisés.

11. Elément de tuyau (10 ; 10') selon au moins l'une quelconque des revendications 8 à 10, **caractérisé en ce que** les tenons (16) sont réalisés en prolongement des languettes de renforcement (15).

12. Elément de tuyau (10 ; 10') selon l'une quelconque des revendications 1 à 11, **caractérisé en ce que** l'élément de tuyau est pourvu d'au moins un manchon de raccord (11) et **en ce qu'**une section de paroi côté manchon de la paroi de regard d'égout (12) est en appui par au moins une traverse de renforcement (17) contre le manchon de raccord (11).

13. Elément de tuyau (10') selon l'une quelconque des revendications 1 à 12, **caractérisé en ce qu'**une tubulure de regard d'égout (40') traverse l'élément de couvercle (20').

14. Elément de tuyau (10') selon la revendication 13, **caractérisé en ce qu'**au moins un élément de barre de verrouillage (30 ; 30') et des évidements de logement de verrouillage (14, 28) sont prévus de part et d'autre de la tubulure de regard d'égout (40').

15. Elément de tuyau (10 ; 10') selon l'une quelconque des revendications 3 à 14, **caractérisé en ce qu'**un élément de barre de verrouillage (30 ; 30') peut être inséré par une zone de la bride (24) en biais dans les évidements de logement de verrouillage (28, 14) opposés dans le corps de bouchon (26) et dans la paroi de regard d'égout (12).

16. Elément de tuyau (10 ; 10') selon l'une quelconque des revendications 5 à 15, **caractérisé en ce qu'**au moins un élément de barre de verrouillage (30') est pourvu d'une languette latérale (31'), dont la longueur est plus petite que la distance entre les nervures transversales et/ou longitudinales (21, 22), sur lesquelles repose l'élément de barre de verrouillage (30').

17. Elément de tuyau (10 ; 10') selon la revendication 16, **caractérisé en ce que** la distance entre une arête supérieure des traverses de renforcement (17) et l'arête inférieure de la bride (24) du couvercle (20) est supérieure à l'épaisseur de la languette (31') de l'élément de barre de verrouillage (30').
